Europäisches Patentamt

(19) European Patent Office

Office européen des brevets

(11) Publication number: **0 151 818**
**A1**

(12) # EUROPEAN PATENT APPLICATION

(21) Application number: **84200189.3**

(22) Date of filing: **13.02.84**

(51) Int. Cl.⁴: **B 29 C 39/32**
**B 29 C 39/02**
**//B29K33/00, B29L7/00**

(43) Date of publication of application:
**21.08.85 Bulletin 85/34**

(84) Designated Contracting States:
**AT BE CH DE FR GB IT LI LU NL SE**

(71) Applicant: **EXPLOITATIEMAATSCHAPPIJ DELTA GLAS B.V.**
**Deltaweg 4**
**NL-4691 RX Tholen(NL)**

(72) Inventor: **Kersten, Gerrit Hendrik**
**Stadhouderslaan 113**
**NL-3116 HM Schiedam(NL)**

(74) Representative: **van der Beek, George Frans et al,**
**Nederlandsch Octrooibureau Johan de Wittlaan 15 P.O.**
**Box 29720**
**NL-2502 LS 's-Gravenhage(NL)**

(54) **Method for manufacturing acrylate plates.**

(57) After a polymerised acrylate plate (5) is removed from the moulding chamber (2, 3) it comprises around its circumference a cord (1). When such a plate is sawn to pieces one is confronted with the problem that a considerable part of the waste strips comprises a piece of said cord and this cord could have a very negative influence on the depolymerisation process of the waste strips. To solve this problem the flexible cord consists of a depolymerisable plastic to which a plasticizer and - if necessary - materials improving the extrudability have been added. Said plasticizer and said materials are stable under depolymerisation conditions, or at least will not decompose into harmful components.

fig-1

EP 0 151 818 A1

- Method for manufacturing acrylate plates. -

The invention relates to a method for manufacturing acrylate plates comprising disposing a flexible cord at some distance from the circumference of a first moulding plate, lying a second moulding plate on said cord, pouring a liquid acrylate into the moulding chamber confined by said moulding plates and said cord, bringing the assembly of moulding plates, cord and acrylate in a device in which polymerisation of the acrylate at increased temperature takes place, and removing the moulding plates.

Such a method belongs to the prior art.

The manufactured plates are sawn into pieces of the desired dimensions and waste strips are sold. To one or more edges of an important part of these waste strips a piece of said cord is adhered said cord consisting of the usual polyvinyl chloride. To employ the waste material economically it has to be depolymerised. If this depolymerisation process of the waste strips would take place together with the adhered PVC-cord, the PVC would burn by which hydrochloric acid would be set free which has a very disadvantageous influence on the retort, while further the combustion residues of the PVC have a contaminating effect on the depolymerised product and by inhaling would be injurious to health. The buyer of the waste strips has the choose either to throw the strips with cord away or to saw the cord from the strips. Both possibilities are rather expensive. The waste material without PVC-cord is worth approximately four times as much as the waste material without PVC-cord.

In an old process a rubber cord was used around which cellophane was wound to may remove the cord from the polymerized plates easily. This process costs a lot of labour, however a more important disadvantage is that the edges of the acrylate plate after having removed the rubber cord, are so sharp that they could cause injuries.

The invention is based on the idea that a considerable saving can be achieved in applying the process as indicated in the preamble, if the waste material obtained after sawing the moulded acrylate plates into pieces of certain dimensions could be depolymerised without removing the cord and without the above mentioned disadvantages.

Therefore according to the invention the method indicated in the preamble is characterized in that the flexible cord consists of a depolymerisable plastic to which a plasticizer and - if necessary - materials improving the extrudability have been added, said plasticizer and materials being stable under depolymerisation conditions, anyway do not decompose into harmful components.

By the application of the invention the waste strips can be treated in a depolymerisation retort without being confronted with the above mentioned disadvantages. Also no trouble with sharp edges is experienced. It has appeared that the rather simple measure according to the invention may lead to considerable economical results. As a rule commercially available plastic cords are not depolymerisable; the idea that depolymerisable cords may be manufactured indeed and may be used in moulded acrylate plates, is at the root of the idea of the present invention.

It is important that during the depolymerisation process the quality of the regenerated monomer is not reduced. Although polystyrene as a base material for a cord is not excluded, it is preferred that the cord consists of 40 to 60 parts of grains or dust of polymethyl metacrylate or polyacrylate and 60 - 40 parts of a plasticizer.

To increase the extrudability a lubricant may be added to the cord material, while it often will be preferred that the cord material will comprise an anti-oxydant.

It is important that the cord adheres well to the edge of the moulded plate of polymerized acrylate, as the loosening of the cord could lead to problems such as very sharp edges of the plate, rim or shrink feet, leakage of the mould. A cord of the above composition meets all the conditions. Obviously the cord may be hollow.

The method according to the invention will now be eludicated with the aid of the figures.

Figure 1 shows a cross-section of a device used for manufacturing acrylate plate.

Figure 2 shows a view of the device according to figure 1.

Figure 3 shows an example of the pattern according to the which the plate is sawn into pieces.

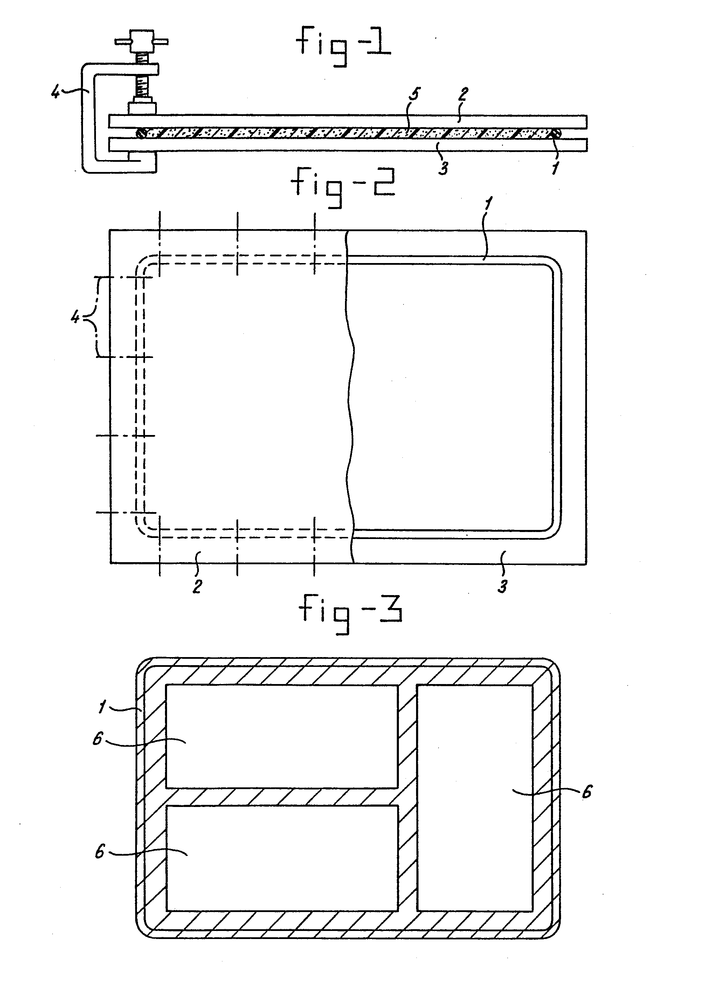

Figures 1 and 2 show two mould plates 2, 3 of glass which are spaced by means of a cord 1 and which are maintained in this position by clamping members 4. A liquid acrylate is poured into the space confined by the two moulding plates and the cord. The assembly is brought for some time in a polymerisation device to polymerise the material to form a plate 5.

After cooling and removing of the clamping members one obtains a cord surrounded acrylate plate from which in accordance with the pattern shown in figure 3, pieces of previously determined dimensions are sawn. These pieces may be subjected to a depolymerisation process without any disadvantage, as the cord 1 according to the invention consists of a depolymerisable plastic to which a plasticizer and, if necessary, materials improving the extrudability have been added. All the substances of which the cord is composed are stable under depolymerisation conditions, anyway do not decompose into harmful components.

As a consequence of the application of the invention from the pieces remaining after sawing the plate, no cord containing edge have to be sawn off before these pieces are supplied into the depolymerisation device. The savings obtained thereby are considerable.

Good results are obtained with a cord consisting of 50 parts of grains or dust of methylmetacrylate and 50 parts of a plasticizer. It is not excluded that small amounts of lubricant an/or an anti-oxydant are added to this material. The possibility of applying the dust set free during the sawing of the acrylate, provides additional benefit. The cord can be hollow.

Several modifications are possible within the scope of the claims. In certain cases polystyrene could be used as a base material for the cord. However, polymethyl metacrylate and/or polyacrylate are preferred.

CLAIMS

1. A method for manufacturing acrylate plates comprising disposing a flexible cord at some distance from the circumference of a first moulding plate, lying a second moulding plate on said cord, pouring acrylate into the moulding chamber confined by said two moulding plates and said cord, bringing the assembly of moulding plates, cord and acrylate into a device in which the acrylate is polymerised at increased temperature, and removing the moulding plates, characterized in, that the flexible cord consists of a depolymerisable plastic to which a plasticizer and - if necessary - materials improving the extrudability have been added, said plasticizer and materials being stable under depolymerisation conditions, anyway do not decompose into harmful components.

2. Method according to claim 1, characterized in, that the cord consists of 40 - 60 parts of grains or dust of polymethyl metacrylate or polyacrylate and 60 to 40 parts of plasticizer.

3. Method according to claim 2, characterized in, that the plasticizer consists of dibutyl phtallate.

4. Method according to anyone of the preceding claims, characterized in, that a lubricant is added to a cord material.

5. Method according to anyone of the preceding claims, characterized in, that an anti-oxydant is added to the cord material.

fig-1

fig-2

fig-3

European Patent
Office

**EUROPEAN SEARCH REPORT**

**0151818**
Application number

EP  84 20 0189

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-4 210 567  (B. KÖSTERS) * column 1, line 5 - column 2, line 42; column 4, lines 21-47; column 7, line 67 - column 8, line 8 * | 1-5 | B 29 C  39/32 B 29 C  39/02 B 29 K  33/00 B 29 L   7/00 |
| Y | US-A-2 470 361  (I. MILLER & A.L. BEISER) * column 1, lines 10-37; column 2, lines 30-52; column 4, lines 13-23 * | 1-5 | |
| A | GB-A- 935 203  (SKANDINAVISK AKRYL INDUSTRI V/F HJELM NIELSEN) * page 1, line 11 - page 2, line 42 * | 1 | |
| A | US-A-3 608 858  (J.O. BEATTIE & J.J. FERRIS) * column 2, lines 1-12; figure 1 * | 1 | TECHNICAL FIELDS SEARCHED (Int. Cl. ³)  B 29 C C 08 F C 09 K |
| A | US-A-4 143 852  (R. WIENER) * column 1, lines 16-43; claim 1 * | 1 | |
| A | US-A-2 412 296  (C.L. SHAPIRO) * column 2, lines 25-47; column 3, line 74 - column 4, line 5 * | 1 | |

//

The present search report has been drawn up for all claims

| Place of search | Date of completion of the search | Examiner |
|---|---|---|
| THE HAGUE | 18-10-1984 | SZAMOCKI G.J.A. |